# EUROPÄISCHE PATENTSCHRIFT

(11) **EP 3 771 554 B1**
(45) Veröffentlichungstag und Bekanntmachung des Hinweises auf die Patenterteilung: **28.08.2024**
(21) Anmeldenummer: 20188308.9
(22) Anmeldetag: 29.07.2020
(51) Int. Cl.: B32B 5/02, B32B 5/24, B32B 5/18, B32B 5/30, B32B 9/00, B32B 9/04, B32B 5/32, B32B 7/12, B32B 3/06, B32B 3/08, A47B 96/20, A47B 95/04

(54) **PLATTENKÖRPER**
PLATE ELEMENT
CORPS EN FORME DE PLAQUE

(30) Priorität: 31.07.2019 DE 102019120672; 26.06.2020 DE 102020116921; 24.07.2020 DE 102020119568
(43) Veröffentlichungstag der Anmeldung: 03.02.2021
(73) Patentinhaber: nobilia-Werke J. Stickling GmbH & Co. KG, 33415 Verl (DE)
(72) Erfinder: Pantwich, Andy, 33104 Paderborn (DE); Wiesing, Tobias, 33129 Delbrück (DE); Degenhardt, Florian, 33803 Steinhagen (DE)
(74) Vertreter: Müller, Enno

(56) Entgegenhaltungen:
- EP-A1- 1 153 738
- EP-A1- 1 795 338
- WO-A1-2005/014285
- DE-U1- 202014 103 706
- GB-A- 2 355 398
- US-A1- 2017 367 482

## Beschreibung

### Gebiet der Technik

Die Erfindung betrifft einen Plattenkörper mit einem mehrlagigem Aufbau, wobei eine erste, im Gebrauch eine Außenfläche bildende Lage aus einem eine steinartige äußere Fläche darbietenden Keramikwerkstoff, Naturstein, einem Quarz-Komposit oder einem sonstigen steinartigen Werkstoff besteht und eine zweite und eine dritte Lage sowie gegebenenfalls weitere Lagen vorgesehen sind, die unter der ersten Lage angeordnet sind, wobei die zweite Lage aus einem mittels eines Bindemittels zu einem Körper verbundenen mineralischen Granulat, mit im Vergleich zu der ersten Lage geringer Zugfestigkeit besteht, und die dritte Lage ein Unterzug sein kann, wobei weiter die erste Lage eine äußere und eine innere Randkante und der Plattenkörper eine Dicke aufweisen, wobei der Randbereich des Plattenkörpers mit einer Kantenleiste abgedeckt ist.

### Stand der Technik

Plattenkörper der in Rede stehenden Art sind bereits in verschiedener Hinsicht bekannt geworden. Unter anderem, wie auch im Rahmen der vorliegenden Anmeldung bevorzugt, gegebenenfalls bei entsprechender weitergehender Anpassung, in Form von Arbeitsplatten für beispielsweise Küchen. In diesem Fall kann, wie auch bevorzugt, die erste Lage eine obere Lage, welche die Arbeitsfläche darstellt, bilden. Solche Arbeitsplatten sind auch bereits aus einem die obere Außenfläche bildenden Naturstein bekannt geworden.

Bei den bekannten Plattenkörpern, wie beispielsweise Arbeitsplatten, ist eine bevorzugt vollflächige Verklebung der ersten Lage mit der zweiten Lage gegeben. Entsprechend ergibt sich hieraus insgesamt ein Verbund-Plattenkörper mit einer, senkrecht zur Breitflächenerstreckung betrachteten, Dicke.

Eine äußere Randkante der ersten Lage begrenzt bevorzugt umlaufend die Außenfläche der ersten Lage, beispielsweise bei einer Arbeitsplatte die Arbeitsfläche, während die innere Randkante auch gegebenenfalls umlaufend die der Außenfläche gegenüberliegende Innenfläche der ersten Lage begrenzt und in der Verbundanordnung mit der zweiten Lage an einer zugewandten, gegebenenfalls ebenfalls umlaufenden äußeren Randkante der zweiten Lage anliegen bzw. dieser zugeordnet verlaufen kann.

Aus der EP 1 795 338 A1 ist ein mehrlagiger Plattenkörper bekannt, bei welchem die beiden äußeren Lagen aus einem Granit-, Quarz-, oder Glasbasierten Material bestehen. Die Kantenleiste besteht aus einem gleichen Material, aus dem auch die genannten Lagen bestehen, also einem stein- oder glasartigen Material.

Aus der WO 2005/014285 A1 ist ein mehrlagiges Plattenteil bekannt, bei welchem die Kantenleiste aus demselben Marmormaterial bestehen soll, aus dem auch die Außenlagen bestehen. Sie kann auch aus Glas, Holz oder Keramik bestehen. Die zweite Lage ist eine Schaumstofflage hoher Dichte mit einer glatten, ebenflächigen Außenfläche.

Im Weiteren ist auf die GB 1355 398, die DE 20 2014 103 706 U1 und die US 2017/0367482 A1 zu verweisen. Die hieraus bekannten Plattenkörper bestehen aus einem Holzwerkstoff.

Aus der EP 1153 738 A1 ist ein mehrlagiger Plattenkörper mit einer mittigen Granulatlage bekannt, wobei keine Kantenleiste ausgebildet ist.

### Zusammenfassung der Erfindung

Ausgehend von der WO 2005/014285 A1 beschäftigt sich die Erfindung mit der Aufgabenstellung, einen Plattenkörper mit einem mehrlagigen Aufbau anzugeben, der hinsichtlich der ersten Lage, die aus Naturstein, Quarzkomposit oder einem sonstigen steinartigen Werkstoff besteht, vorteilhaft in der täglichen Nutzung geschützt ist.

Diese Aufgabe ist beim Gegenstand des Anspruchs 1 gelöst, wobei darauf abgestellt ist, dass im Bereich der zweiten Lage hinsichtlich der Verbindungsfläche eine dreidimensional strukturierte Oberfläche gegeben ist, dass die Kantenleiste sich ausgehend von der äußeren Randkante der die Außenfläche bildenden ersten Lage über eine gesamte Dicke des Plattenkörpers erstreckt, wobei sie auch in Überdeckung zu der dritten Lage ist, dass die Kantenleiste aus einem polymeren Kunststoff besteht, dass die Kantenleiste mit den Lagen verklebt ist und dass eine Dicke der Klebeschicht im Bereich der zweiten Lage über die Verbindungsfläche unterschiedlich ist, zwischen beispielsweise zwei Millimeter und drei Millimeter und praktisch keiner Dicke, etwa 0,1 mm oder 0,2 mm und dass die Verbindungsfläche sich über die gesamte Dicke des Plattenl<örpers, ausgehend von einer äußeren, die Außenfläche begrenzenden Randkante der ersten Lage über eine innere Randkante der ersten Lage hinaus bis zu einer unteren äußeren Randkante der zweiten Lage bzw. bei einer entsprechenden Anordnung der dritten Lage, wobei sich die Verbindungsfläche aus den zum Randbereich hin offenen Stirnflächen der einzelnen Lagen ergibt.

Die Anordnung einer Kantenleiste, die sich über die gesamte Dicke des Plattenkörpers erstreckt, entsprechend sowohl über die senkrecht zur Breitflächenerstreckung betrachtete Dicke der zweiten oder mehr weiteren Lagen wie auch der ersten Lage, ist vorteilhaft im Hinblick auf die Gestaltung und den Schutz des Plattenkörper-Randbereiches. Somit ist auch die an sich keiner Überdeckung durch eine Kantenleiste bedürftige erste Lage in ihrem Randbereich überdeckt, und zwar in unmittelbarer Verbindung, bevorzugt gegeben durch materialeinheitlich dieselbe Kantenleiste, mit einer Überdeckung der einen oder mehr weiteren Lagen. Insbesondere dann, wenn die Kantenleiste aus einem flexiblen Werkstoff, wie insbesondere einem polymeren Kunststoff, besteht, ist auch ohne weiteres eine günstige Stoßcharakteristik erreichbar. Auch bei einer aus Metall oder Holzwerkstoff bestehenden Kantenleiste kann noch eine Stoßcharakteristik erreicht sein, die, worauf es in der praktischen Anwendung bei einer Arbeitsplatte etwa ankommt, einem Zerspringen eines Geschirrteils bei einem unbeabsichtigten Anstoßen an die Arbeitsplatte insbesondere im Bereich der steinartigen, die äußere Fläche bildenden ersten Lage ansonsten leicht eintreten kann, vorbeugt. Auch ergibt sich ein Schutz der Arbeitsplatte in dem Sinne, dass Abstoßungen, auch als Ausmuschelung bezeichnet, vorgebeugt wird. Gerade im Bereich der ersten Lage ist eine solche Stoßcharakteristik daher insbesondere gewünscht. Durch die Anordnung einer Kantenleiste ist auch eine variable, insbesondere optisch variable Gestaltung des Plattenkörper-Randbereiches ermöglicht. Es kann diesbezüglich eine insbesondere auch gegenüber der Außenfläche der ersten Lage unterschiedliche oder gleiche Farb- bzw. Mustergestaltung der Kantenleiste gegeben sein.

Die Kantenleiste erstreckt sich hinsichtlich der Dicke des Plattenkörpers auch bis in den Bereich eines Unterzuges bzw. ist gesehen von der Seite in Überdeckung hierzu. Diese Erstreckung hat insbesondere einen Vorteil, wenn, wie im Rahmen der vorliegenden Erfindung bevorzugt, die Kantenleiste vollständig nur oder jedenfalls im Wesentlichen durch Verklebung mit dem Plattenkörper im Übrigen verbunden ist. Diese Erstreckung über die Dicke des Plattenkörpers ist bevorzugt auch unabhängig davon, aus wie vielen Lagen sich der Plattenkörper zusammensetzt.

Bezüglich der ersten und der zweiten Lage ist nicht ausgeschlossen, dass zwischen diesen Lagen noch eine oder mehrere weitere, entsprechend vorliegender Beschreibung dann vierte usw. Lage, etwa als unmittelbar unter der die steinartige äußere Fläche bildenden ersten Lage angebundene Lage aus beispielsweise geharztem Gewebe, angeordnet ist. Es kann auch unter der ersten Lage eine bevorzugt im Wesentlichen homogen geschlossen ausgebildete Lage, wie etwa aus einer polymeren Gießlage bestehend, ausgebildet sein. Hierzu bietet sich als Werkstoff beispielsweise ein wie weiter unten auch beschriebener Polymerschaum an.

Die eine oder mehreren weiteren Lagen sind insbesondere bevorzugt hinsichtlich einer Zugfestigkeit besonders ausgelegt. Es ist bevorzugt, insofern einen Werkstoff mit guten Zugeigenschaften einzusetzen, um einem Herausziehen oder Herausbrechen der Kantenleiste vorzugbeugen. Diese weitere Lage kann auch (nur - oder ergänzend bei bspw. zwei derartigen weiteren Lagen) in der Abfolge von oben vor der untersten Lage angeordnet sein. Bezüglich dieser weiteren Lage kann es sich auch um keine eigentliche Lage handeln, sondern nur um einen besonderen Bereich der zweiten Lage, der etwa verstärkt mit Bindemittel versehen ist, um so innerhalb dieser zweiten Lage einen sich (parallel zu der ersten Lage) erstreckenden Bereich erhöhter Zugfestigkeit zu bilden. Dieser Bereich erhöhter Zugfestigkeit kann über die Länge des Plattenkörpers auch nur über einen Teil, also vorzugsweise randseitig, vorgesehen sein.

Eine erhöhte Zugfestigkeit kann bedeuten, dass die Zugfestigkeit dem 1,5-Fachen oder mehr der Zugfestigkeit der zweiten Lage, soweit diese nicht bereits verstärkt ausgebildet ist, entspricht. Sie kann bis hin zu dem 10-Fachen oder mehr betragen.

Dadurch, dass sich die Kantenleiste erfindungsgemäß auch über die Dicke der ersten Lage erstreckt, bevorzugt bis hin zu der äußeren Randkante der ersten Lage, ist dieser stoßsensible Randkantenbereich der ersten Lage durch die überdeckende Kantenleiste geschützt. Die Haptik ist über die gesamte Dicke des Randbereiches des Plattenl<örpers verbessert.

Die Randkante ist bevorzugt als solche, insbesondere bei Raumtemperatur, flexibel. Soweit sie flexibel ist, können insbesondere auch Plattenkörper mit einem Grundriss, der abweichend von einem rechtwinkligen Grundriss ist, mit einer solchen Randkante günstig versehen werden. Es können Abrundungen, etwa Viertelkreise oder Vollkreise, in einem Randbereich des Plattenkörpers gegeben sein, die mit der Randkante versehen sind. Zudem ist eine flexible Randkante bevorzugt auch als Rollware vorhaltbar und einsetzbar.

Weiter ist durch die Anordnung einer sich über die gesamte Dicke des Plattenkörpers erstreckenden Kantenleiste auch eine variable geometrische Ausbildung des Randbereiches insgesamt erreichbar, beispielsweise zufolge Ausbildung einer in einem Profil gekrümmt oder in einem spitzen Winkel zu einer horizontal verlaufenden Randkante sich erstreckenden Außenfläche der Kantenleiste.

Hinsichtlich eines Unterzuges, beispielsweise der dritten Lage, kann es sich um ein Glasfasergewebe handeln. Es kann sich auch um einen sonstigen Faserstoff handeln, etwa um Naturfasern oder Biofasern, wobei die Fasern gewebt oder auch in Wirrlage vorliegen können. Unter Biofasern werden insbesondere solche Fasern verstanden, die sich in physiologischen Flüssigkeiten, wie sie etwa in Lungenbläschen des Menschen vorkommen, auflösen. Sie können daher nicht schädlich sein. Dieser Unterzug, ggf. also das Glasfasergewebe, kann mit einem Klebstoff, mit dem es beispielsweise auch mit der zweiten Lage verbunden ist, ausgehärtet getränkt sein. Die dritte Lage kann aber auch als steinartige Lage, aus einem der Werkstoffe beispielsweise wie sie für die erste Lage beschrieben sind, gebildet sein.

Hinsichtlich der Kantenleiste kann weiter ein formstabiler, gegebenenfalls elastisch oder plastisch verformbarer, weiter gegebenenfalls rückstellfähiger polymerer Werkstoff verwendet sein.

Die Kantenleiste kann in weiterer Einzelheit aus einem thermoplastischen Material bestehen, aus einem Kunststoffmaterial, wie insbesondere einem Polyolefin-Kunststoff (weiter beispielsweise Polypropylen). Beispielsweise kommt auch ein ABS-I<unststoff (Acrylnitril-Butadien-Styrol-Copolymer) in Frage. Weiter beispielsweise kann auch ein CU-bedampfter Kunststoff zur Anwendung kommen.

Bei Ausbildung der Kantenleiste aus einem Kunststoffmaterial kann dieses zunächst beispielsweise als ein Strangpressprofil vorliegen. Wie schon angemerkt, kann es sich um ein Strangpressprofil handeln, das bei entsprechender Flexibilität des Werkstoffes letztlich eine Vorratshaltung in Form einer Rollenware ermöglicht.

Die Kantenleiste kann gemäß einer bevorzugten Ausgestaltung an einer in einem Querschnitt im Wesentlichen rechtwinklig zu der Außenfläche und durchgehend gerade verlaufenden Verbindungsfläche des Plattenkörpers angebracht sein. Die Verbindungsfläche kann sich in diesem Fall senkrecht zu der Außenfläche in Dickenrichtung des Plattenkörpers erstrecken, bis hin zu einem spitzen Winkel von wenigen Graden, beispielsweise 2 Grad oder 3 Grad, zu einer Senkrechten einschließend.

Das Anbringen der Kantenleiste an dem Plattenkörper ist durch eine Verklebung gegeben. In diesem Zusammenhang ist beispielsweise eine Verklebung mit einem Schmelzklebstoff ("Hotmelt") möglich. Diese Schmelzklebstoffe können beispielsweise auf Basis von Polyamiden, Polyethylen und weiteren Kunststoffen (APAO, EVAC, TPE-E, TPE-U, TPE-A) und Vinylpyrrolidon/Vinylacetat-Copolymere gebildet sein. Darüber hinaus sind auch Schmelzklebstoffe auf einer Harzbasis (Terpene, Kohlenwasserstoffharze) beispielsweise möglich. Darüber hinaus ist auch der Einsatz eines schäumenden Klebstoffes, insbesondere eines schäumenden PolyurethanKlebstoffes, möglich.

Im Hinblick auf die unterschiedlichen Materialien, aus welchen der Plattenkörper über seine Dicke gesehen besteht, ist auch eine bevorzugte Ausgestaltung dadurch gegeben, dass über die Dicke des Plattenkörpers zwischen dem Plattenkörper und der Kantenleiste unterschiedliche Klebstoffe zur Anwendung kommen. Es kann also herstellungsmäßig ein Klebstoff vorgesehen sein, der der zweiten Lage zugeordnet ist und ein anderer Klebstoff, welcher der ersten Lage zugeordnet ist und auf die jeweilige Materiall<ombination insofern speziell abgestimmt sein kann.

Unterschiedliche Klebstoffe über die Dicke des Plattenkörpers können auch unabhängig von einer Zuordnung zu einzelnen Lagen Bedeutung haben. Beispielsweise kann es vorteilhaft sein, gesehen über einen Querschnitt, unten und/oder oben einen schnell abbindenden Klebstoff vorzusehen und in einem beispielsweise mittleren Bereich einen langsam abbindenden Klebstoff. Hiermit kann beispielsweise eine Klebesicherung der Kantenleiste in einem oder beiden Randbereichen vergleichsweise schnell sichergestellt sein, zugleich aber auch, in einem oder mehreren weiteren Bereichen, Zeit gegeben sein zur Erreichung einer verstärkten Klebeverhaftung mittels eines langsamer aushärtenden Klebers.

Der Klebstoff, unabhängig davon, ob über die Dicke unterschiedliche Klebstoffe oder ein einheitlicher Klebstoff angewendet wird, kann auch expandierend gewählt sein. Hierdurch kann sich eine besonders günstige Verkrallungseigenschaft im Hinblick auf die Befestigung an der entsprechenden Lage ergeben. Bei mehreren über die Dicke vorgesehenen Klebstoffen können auch eine oder mehrere dieser Klebstoffe expandierend gewählt sein.
Bezüglich des Plattenkörpers handelt es sich im Bereich der zweiten oder weiteren Lagen (Trägerlagen) hinsichtlich der Verbindungsfläche um eine dreidimensional strukturierte Oberfläche, dies insbesondere zufolge Ausbildung und Herstellung der zweiten und gegebenenfalls in diesem Zusammenhang weiteren Lagen. Ausgehend von einer bevorzugt ebenengleich in die Verbindungsfläche der ersten Lage übergehenden Verbindungsebene der zweiten Lage können sich zufolge der dreidimensionalen Oberflächenstruktur Rücksprünge und Hintergriffe ergeben, die vorteilhaft eine Verhaftung bzw.
Verklebung der Kantenleiste mit der zweiten oder den weiteren Lagen ermöglicht.

Hinsichtlich einer vorteilhaften Verhaftung bzw. Verklebung der Kantenleiste mit der eine dreidimensional strukturierte Oberfläche aufweisenden beispielsweise zweiten Lage kann auch in dieser Lage eine einen Teil der Dicke der zweiten Lage einnehmende, in die im Wesentlichen rechtwinklig zu den Lagen verlaufende Verbindungsfläche übergehende, Ausnehmung vorgesehen sein. Hiermit kann die Verbindungsfläche günstig vergrößert sein. Die Vergrö-ßerung kann einerseits durch einen von der Kantenleiste ausgehenden, sich in die Ausnehmung erstreckenden Fortsatz genutzt sein. Dieser Fortsatz kann auch weiter bevorzugt widerhakenartig gebildet sein. Zusätzlich zu einer Verklebung kann so auch eine mechanische Verkrallung der Kantenleiste in dieser Lage erreicht werden. Auch kann die Ausnehmung mit einer Füllmasse, wie weiter unten noch beschrieben, ausgefüllt sein, wobei die Füllmasse außenseitig eine Fläche bildet, die bevorzugt mit der Verbindungsfläche im Übrigen (wieder) fluchtet.

Die Kantenleiste kann in der Verbindungsfläche über die genannte gesamte Dicke mit dem Plattenkörper verklebt sein. So kann weiter entsprechend eine Verklebung der Kantenleiste sowohl mit der ersten Lage als auch mit der zweiten und gegebenenfalls weiteren Lagen, wie auch bevorzugt, vorgesehen sein.

Ein zur Verklebung genutzter Klebstoff kann im Zuge der Herstellung gesondert auf die Verbindungsfläche und/oder auf die zugewandte Fläche der Kantenleiste aufgebracht sein. Dabei kann es sich um einen Klebstoff handeln, der gleich oder unterschiedlich zu dem Bindemittel zur Herstellung der zweiten Lage und gegebenenfalls weiteren Lagen und/oder zum Klebstoff zwischen der ersten und der zweiten und gegebenenfalls weiteren Lagen ausgebildet ist. Wie bereits angemerkt, ist in diesem Zusammenhang auch bevorzugt, gegebenenfalls über die Dicke des Plattenkörpers unterschiedliche Klebstoffe zu verwenden.

In diesem Zusammenhang kann ein Heißkleber genutzt sein, weiter beispielsweise ein Einkomponentenklebstoff, alternativ oder zusätzlich in einem weiteren Bereich der Dicke des Plattenkörpers ein Zweikomponentenklebstoff.

Die Verklebung kann auch alternativ auf einem Kaschiervorgang beruhend vorgenommen werden, beispielsweise zufolge einer Presskaschierung in einer entsprechenden Kaschiervorrichtung. Die Kaschierung kann unter Nutzung und Zwischenlage eines Nassklebstoffes, alternativ eines Trockenklebstoffes erfolgen (Nasskaschieren bzw. Trockenkaschieren). Auch ist diesbezüglich eine Thermokaschierung möglich, wobei unter Einfluss von Wärme beispielsweise der der Verbindungsfläche des Plattenkörpers zugewandte Bereich der Kantenleiste derart erwärmt wird, dass das hierbei bevorzugt vorgesehene thermoplastische Material der Kantenleiste zur Verklebung der Kantenleiste mit dem Plattenkörper angeschmolzen wird. Beispielsweise kann die gezielte Wärmebeaufschlagung der Kantenleiste durch Lasertechnik erreicht werden.

Die Wärmebeaufschlagung mittels Lasertechnik bedeutet beispielsweise, dass eine mit einer ausgehärteten Klebstofflage versehene Kantenleiste, wobei diese Klebstofflage wie weiter vorne beschrieben auch im Hinblick auf die Dicke des Plattenkörpers aus unterschiedlichen Klebstoffen bestehen kann, durch Laserstrahlen aktiviert wird. Die Aktivierung bedeutet insbesondere, die Klebstoffmasse in einen klebrigen oder flüssigen Zustand zu überführen. Insbesondere kann mit dieser Lasertechnik auch gezielt unterschiedlich stark Energie in unterschiedliche Bereiche der Klebstofflage der Kantenleiste eingebracht werden. Auch hierdurch kann insbesondere günstig eine unterschiedliche Aktivierung der unterschiedlichen Klebstoffe erreicht werden. Wie auch weiter unten noch im Einzelnen ausgeführt, kann auch die Kantenleiste als solche aus einem Werkstoff bestehen, der als solcher und ohne weiteres durch Erwärmen in einen klebrigen Zustand überführbar ist. Bei einer solchen Kantenleiste kann (allein) mittels Laserstrahlen ein Außenflächenbereich erweicht werden, so dass die Kantenleiste aus ihrem eigenen Werkstoff heraus eine Klebrigkeit in dem erforderlichen Maße entwickelt, die dann zur Verklebung genutzt werden kann.

In weiterer Ausgestaltung kann bezüglich des gewählten Klebstoffes der gleiche Klebstoff gewählt sein, der auch zur Verbindung der ersten Lage mit der zweiten und gegebenenfalls weiteren Lagen zur Bildung des Plattenkörpers dient.

Hinsichtlich der ersten Lage kann es sich um einen Naturstein handeln. Hinsichtlich der Ausbildung aus einem sonstigen steinartigen Werkstoff kann es sich beispielsweise um einen Werkstoff handeln, der aus einem Kunststoff-/ Granulatgemisch bestehen kann. Es kann sich auch um einen Keramikwerkstoff handeln. Letztlich ist mit einem sonstigen steinartigen Werkstoff jeder Werkstoff angesprochen, der einem Nutzer eine Oberfläche mit einer steinartigen Qualität bietet, beispielsweise eben auch Keramik.

Die zweite Lage kann aus einem mineralischen Granulat bestehen, beispielsweise aus einem Blähgranulat oder auch einem Blähsand, darüber hinaus gegebenenfalls aus einem Gemenge aus gebrochenem und geriebenem Gestein. Das mineralische Granulat ist bevorzugt unter Nutzung eines kleberartigen Bindemittels gebunden, wobei sich eine dreidimensionale Oberfläche ergeben kann. Die Oberflächenstruktur dieser zweiten Lage ist bevorzugt deutlich unebener als die zugeordnete Oberfläche der ersten Lage und gegebenenfalls im Vergleich zu der zugewandten Oberfläche der ersten Lage zerklüftet. Dies gilt im Übrigen auch bezüglich der sich randseitig der ersten Lage und randseitig der zweiten Lage ergebenden Verbindungsflächen für die Kantenleiste.

Die zweite Lage kann auch aus einem Schaumstoff, insbesondere einem Hartschaumstoff oder einem sonstigen Werkstoff mit im Vergleich zu der ersten Lage jedoch typischerweise geringerer Dichte und/oder geringerer Zugfestigkeit bestehen. Beispielsweise kann es sich um eine Gießmasse handeln, die einen anorganischen Füllstoff wie etwa Quarzsand aufweist. Hierzu ist etwa auf die WO 96/16089 A1 zu verweisen. Es kann sich bspw. um Polyurethan oder Polystyrol handeln. Bevorzugt hierbei mit einer Dichte von weniger als 500 kg/m³.

Es kann sich weiter um einen organischen oder anorganischen Polymerschaum handeln.

Das Maß einer Oberflächenrauigkeit der Oberflächenstruktur der zweiten Lage, auch Rauheitswert genannt, liegt bevorzugt oberhalb von RZ 25 (gemittelte Rautiefe in µm), die etwa durch das Tastschnittverfahren ermittelt werden kann.

Hinsichtlich einer Gesamtdicke eines solchen Plattenkörpers ist bevorzugt, dass diese im Bereich von etwa 10 mm bis etwa 50 mm oder 100 mm gegeben ist. Hierbei kann die erste Lage eine Dickenabmessung von beispielsweise 1 mm bis 10 mm, bevorzugt im Bereich von etwa 2 mm bis 6 mm, aufweisen.

Es kann weiter eine dritte Lage vorgesehen sein, beispielsweise eine Gewebelage, insbesondere eine Glasfasergewebelage. Eine solche dritte Lage kann unterseitig der zweiten Lage befestigt, insbesondere mit der zweiten Lage klebebefestigt sein.

Eine solche dritte Lage ist bevorzugt vergleichsweise dünn, mit einem Dickenbereich von etwa 1 mm, gebildet. Die Dicke einer solchen dritten Lage kann gemäß der Erfindung in die Gesamtdicke des Plattenkörpers einfließen, so dass eine vorgesehene Kantenleiste auch diese dritte Lage randseitig überdecken kann.

Das Differenzmaß (Gesamtdicke abzüglich der Dicken für die erste und gegebenenfalls dritte Lage) ergibt das Dickenmaß der zweiten Lage. Dies insbesondere auch im Hinblick auf ein übliches Dickenmaß für eine Arbeitsplatte in einer Küche, die in der Regel bei etwa 38 mm oder 16 mm liegt. Es sind aber eben auch hiervon abweichende Dicken durchaus sinnvoll einsetzbar.

Es kann allein nur ein Randbereich mit einer vorbeschriebenen Kantenleiste versehen sein, beispielsweise ein Sicht-Randbereich einer Arbeitsplatte. Darüber hinaus können auch mehrere Randbereiche, beispielsweise gegenüberliegende Randbereiche des Plattenkörpers mit einer derartigen Kantenleiste versehen sein, darüber hinaus auch mehr als zwei Randbereiche bis hin zu allen Randbereichen des Plattenkörpers.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: ein schematisch dargestelltes Küchenmöbel mit einem darauf befindlichen Plattenkörper in Form einer Arbeitsplatte;
- Fig. 2: den vergrößerten Schnitt gemäß der Linie II - II in Figur 1 durch den Plattenkörper;
- Fig. 3: die Herausvergrößerung des Bereiches III mit dazugehörigen Lupendarstellungen, betreffend eine erste Ausführungsform;
- Fig. 4: eine der Figur 3 im Wesentlichen entsprechende Darstellung, betreffend eine zweite Ausführungsform;
- Fig. 5: eine der Figur 3 entsprechende Querschnittsdarstellung mit einer weiteren Ausführungsform, bei welcher die Kantenleiste einen Rastfuß aufweist;
- Fig. 6: eine weitere Ausführungsform ausgehend von einer Darstellung gemäß Figur 5, wobei jedoch die Ausnehmung mit einem von der Kantenleiste unabhängigen Halterungsmaterial verfüllt ist;
- Fig. 7: eine Ausführungsform des Plattenkörpers bei einer Darstellung gemäß Figur 5 bzw. Figur 6, in welcher ein abweichender Lagenaufbau des Plattenkörpers gegenüber den Darstellungen in Figur 5 und Figur 6 vorgesehen ist;
- Fig. 8: eine weitere Ausführungsform des Plattenkörpers in einer Darstellung gemäß Fig. 7, wobei jedoch eine weitere Lage unterseitig angeordnet ist; und
- Fig. 9: eine Ausführungsform ausgehend von einer Darstellung gemäß Fig. 5, mit mehreren Rastfüßen.

### Beschreibung der Ausführungsformen

Anhand eines Ausführungsbeispiels einer aus einem Plattenkörper 1 hergestellten Arbeitsplatte 2 eines Küchenmöbels 3 ist die Erfindung weiter erläutert.

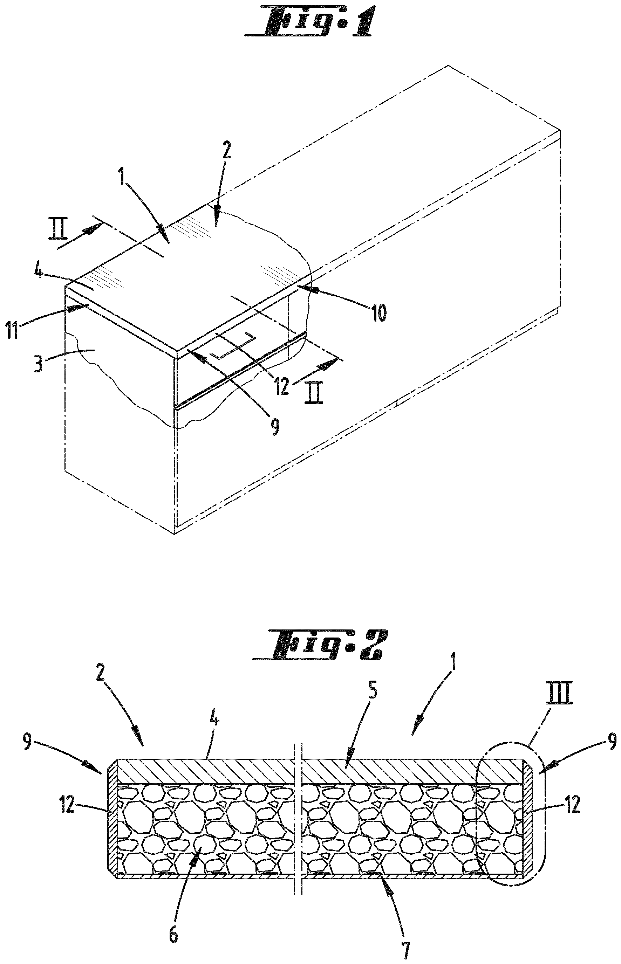

Ein Küchenmöbel 3, vgl. Figur 1, kann eine solche Arbeitsplatte 2 in Form eines Plattenkörpers 1 aufweisen. Es kann sich um ein Küchenmöbel 3 handeln, wie es in einer üblichen Haushaltsküche verwendet wird.

Darüber hinaus kann auch in sonstigen Bereichen, auch nicht auf eine Küche beschränkt, ein Plattenkörper 1 in der hier beschriebenen Art vorgesehen sein.

Die Dicke d des Plattenkörpers 1 kann bei Ausbildung einer üblichen Küchen-Arbeitsplatte 2 im Bereich von etwa 38 mm angesetzt werden. Es können aber auch Plattenkörper 1 mit geringerer Dicke von beispielsweise (nur) 13 mm Verwendung finden.

Für weitere Anwendungen kann es sich auch um einen deutlich dickeren Plattenkörper 1 handeln, beispielsweise bis hin zu einer Dicke d von 100 mm. Ein bevorzugter Bereich der möglichen Dicken d kann somit zwischen 16 mm und 100 mm liegen.

Der Plattenkörper 1 weist bevorzugt einen mehrlagigen Aufbau auf, wie dieser in weiterer Einzelheit auch in Figur 2 dargestellt ist.

Bezüglich des Plattenkörpers 1 bzw. konkret anhand des dargestellten Ausführungsbeispiels der Arbeitsplatte 2 ist eine im Gebrauch eine Außenfläche 4 bildende erste Lage 5 vorgesehen. Unter der ersten Lage 5 befindet sich eine weitere, zweite Lage 6 und gegebenenfalls - wie auch bei dem Ausführungsbeispiel anhand der Arbeitsplatte 2 dargestellt - als unterer Abschluss eine weitere, dritte Lage 7.

Die erste Lage 5, welche in dem dargestellten Ausführungsbeispiel die Arbeitsfläche (Außenfläche 4) der Arbeitsplatte 2 darstellt, kann, wie auch bevorzugt, einen steinartigen Charakter aufweisen.

Die zweite Lage 6 kann gemäß dem Ausführungsbeispiel beispielsweise aus einem mineralischen Granulat gebildet sein. Dieses Granulat ist mittels eines Bindemittels zu einem eigenständigen Körper verbunden.

Die erste Lage 5 ist mit der zweiten Lage 6 bevorzugt unmittelbar, lediglich durch eine Klebeschicht 8 verbunden, hierbei aneinandergrenzend vorgesehen. Die Klebeschicht 8 ist auch bevorzugt lediglich als solche aus Klebstoff bestehend vorgesehen.

Zwischen der ersten Lage 5 und der zweiten Lage 6 kann ein Klebstoff als Kleberschicht 8 vorgesehen sein. Dieser Klebstoff kann in dem ausgehärteten Zustand, wie er bei einer fertiggestellten Arbeitsplatte 2 beispielsweise gegeben ist, eine dreidimensionale Oberflächenstruktur der zweiten Lage 6 eng umfassen.

Die gegebenenfalls vorgesehene untere, dritte Lage 7 kann eine vergleichsweise dünne Lage sein, die weiter beispielsweise als Unterzuglage gebildet sein kann. So kann diesbezüglich beispielsweise ein harzgetränktes Gewebe vorgesehen sein.

Die untere, dritte Lage 7 kann durch eine weitere - in den Zeichnungen nicht dargestellte - Kleberschicht mit der zweiten Lage 6 verbunden sein.

Ein Randbereich 9, beispielsweise ein Längsrandbereich 10 und/oder ein Schmalrandbereich 11 des Plattenkörpers 1 - hier der Arbeitsplatte 2 - ist bevorzugt mit einer Kantenleiste 12 abgedeckt. Im Falle einer Arbeitsplatte 2 kann dieser Randbereich 9 der in den Raum, beispielsweise Küchenraum, weisende Längsrandbereich 10 der Arbeitsplatte 2 sein.

Die Kantenleiste 12 kann, wie auch bevorzugt, aus einem Kunststoffmaterial bestehen, beispielsweise aus Polypropylen, kann darüber hinaus weiter beispielsweise als Strangpressprofil hergestellt sein. Die Kantenleiste kann auch aus Holz oder Metall bestehen. Soweit sie flexibel ist, ist auch bevorzugt, dass sie als Rollenware vorgehalten werden kann.

Die Kantenleiste 12 kann darüber hinaus auf die Länge des abzudeckenden Randbereiches 9 angepasst abgelängt vorliegen.

Die Anordnung der Kantenleiste 12 an dem Plattenkörper 1 erfolgt bevorzugt zufolge Verklebung. Die diesbezügliche Klebeschicht 13 ist auch hier bevorzugt lediglich als solche aus Klebstoff bestehend gebildet.

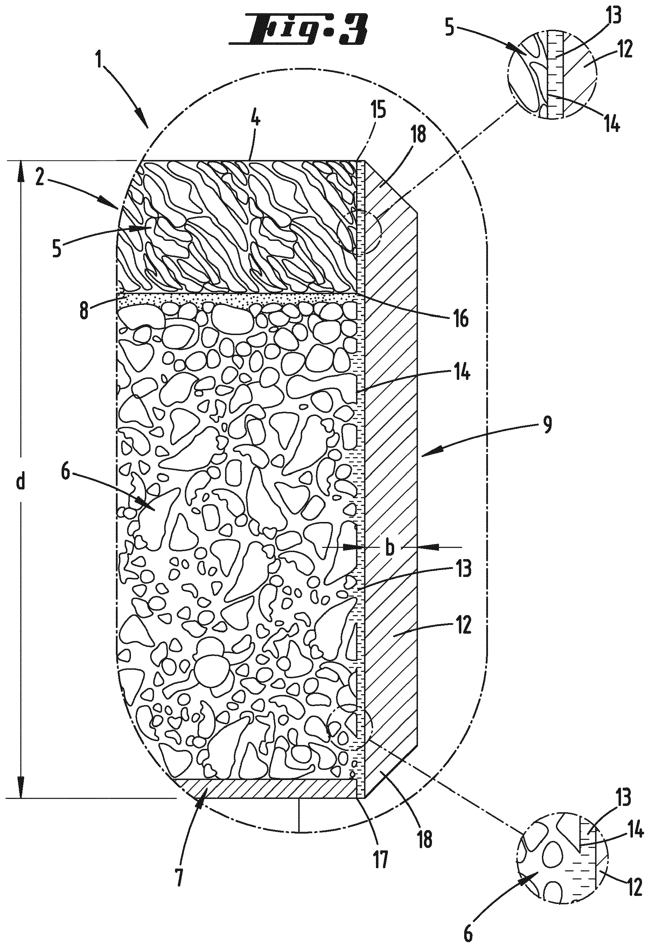

Mit Bezug auf einen Querschnitt durch den Plattenkörper 1 gemäß der Darstellung in Figur 3 ergibt sich rechtwinklig und bei Ausbildung des Plattenkörpers 1 als Arbeitsplatte 2 in der Nutzungsstellung bevorzugt im Wesentlichen in senkrechter Ausrichtung eine Verbindungsfläche 14 des Plattenkörpers 1 im Randbereich 9, zur Verbindung der Kantenleiste 12 mit dem Plattenkörper 1.

Die Verbindungsfläche 14 erstreckt sich über die gesamte Dicke d des Plattenkörpers 1, so entsprechend ausgehend von einer äußeren, die Außenfläche 4 begrenzenden Randkante 15 der ersten Lage 5 über die innere Randkante 16 der ersten Lage 5 hinaus bis zu einer unteren äußeren Randkante 17 der zweiten Lage 6 bzw. bei entsprechender Anordnung der dritten Lage 7, wie auch dargestellt. Im Einzelnen ergibt sich die Verbindungsfläche 14 aus den zum Randbereich 9 hin offenen Stirnflächen der einzelnen Lagen, so insbesondere der ersten Lage 5 und der zweiten Lage 6, gegebenenfalls darüber hinaus auch der dritten Lage 7.

Die diesbezügliche, einen Teil der Verbindungsfläche 14 bildende Stirnfläche der ersten Lage 5 kann eine im Wesentlichen glatte, nicht oder wenig strukturierte Fläche bieten, während die zweite Lage 6, wie auch bereits bezüglich der Klebeverbindung der ersten Lage 5 mit der zweiten Lage 6 beschrieben, zur Verbindungsfläche 14 hin eine dreidimensionale Oberflächenstruktur zufolge der Ausbildung der zweiten Lage 6 insbesondere aus einem gebundenen mineralischen Granulat, anbieten kann.

Der Klebstoff dieser weiteren Klebschicht 13 kann entsprechend auch in diesem Bereich zur Verbindung der Kantenleiste 12 mit dem Plattenkörper 1 eine feste Verbindung im Zuge der Aushärtung mit dieser dreidimensionalen Oberflächenstruktur eingehen.

Die Klebeschicht 13, darüber hinaus gegebenenfalls auch die Klebeschicht 8, kann sehr dünn gegeben sein. Es kann auch gegeben sein, dass die Kantenleiste 12 und die Lagen 5 und 6 - gegebenenfalls auch 7 - an vorstehenden Bereichen, insbesondere im Hinblick auf das mineralische Granulat der zweiten Lage 6, unmittelbar aneinander liegen und dazwischen keine oder nur eine sehr dünne Klebstofflage gegeben ist, die dann in der weiteren Fläche (Verbindungsfläche 14) wieder verdickt gegeben sein kann. Somit ist die Dicke der Klebeschicht 13 zwischen beispielsweise 2 mm und 3 mm und praktisch keiner Dicke, etwa 0,1 mm oder 0,2 mm, über die Verbindungsfläche 14 unterschiedlich (siehe auch lupenartige Detaildarstellungen in Figur 3).

Die Kantenleiste 12 erstreckt sich über die gesamte Dicke d des Plattenkörpers 1, entsprechend über die gesamte Verbindungsfläche 14, mit einer senkrecht zur Verbindungsfläche 14 betrachteten Breite b, die einem Mehrfachen der in derselben Richtung betrachteten Dicke der Klebeschicht 13 entsprechen kann, so beispielsweise mindestens einem Drei-Fachen bis hin zu einem 100-Fachen, weiter beispielsweise etwa einem 20-Fachen.

Zufolge der bevorzugt gesonderten Herstellung der Kantenleiste 12, beispielsweise im Strangpressverfahren, kann diese an die Oberflächengestaltung der Arbeitsplatte 2 optisch angepasst gestaltet sein oder auch einen beispielsweise farblichen Kontrast bieten.

Durch die auch randseitige Überdeckung der ersten, die Außenfläche 4 bietende Lage 5 durch die Kantenleiste 12 ist die ansonsten stoßsensible äußere Randkante 15 der ersten Lage 5 geschützt.

Die Außenfläche 4 der ersten Lage 5 kann dabei ebenengleich in eine im Anordnungszustand nach außen weisende Randfläche der Kantenleiste 12 übergehen.

Gemäß dem dargestellten Ausführungsbeispiel kann weiter der nach außen, bei einer Arbeitsplatte 2 insbesondere nach oben weisende Randabschnitt 18 beispielsweise mit einer Fase versehen sein, entsprechend gebildet durch eine schrägabfallende Fläche (vgl. Figur 3). Auch der diesbezüglich nach unten weisende Randabschnitt 18 kann derart gestaltet sein. Alternativ zu einer Fase kann auch eine Verrundung des Randabschnittes 18 gegeben sein.

Insgesamt kann die Verklebung der Kantenleiste 12 entlang der Verbindungsfläche 14 der Arbeitsplatte 2 auf einem Kaschiervorgang beruhend vorgenommen sein. In diesem Zusammenhang kann alternativ auch eine Thermokaschierung vorgenommen sein, entsprechend eine Kaschierung unter Wärmeeinfluss.

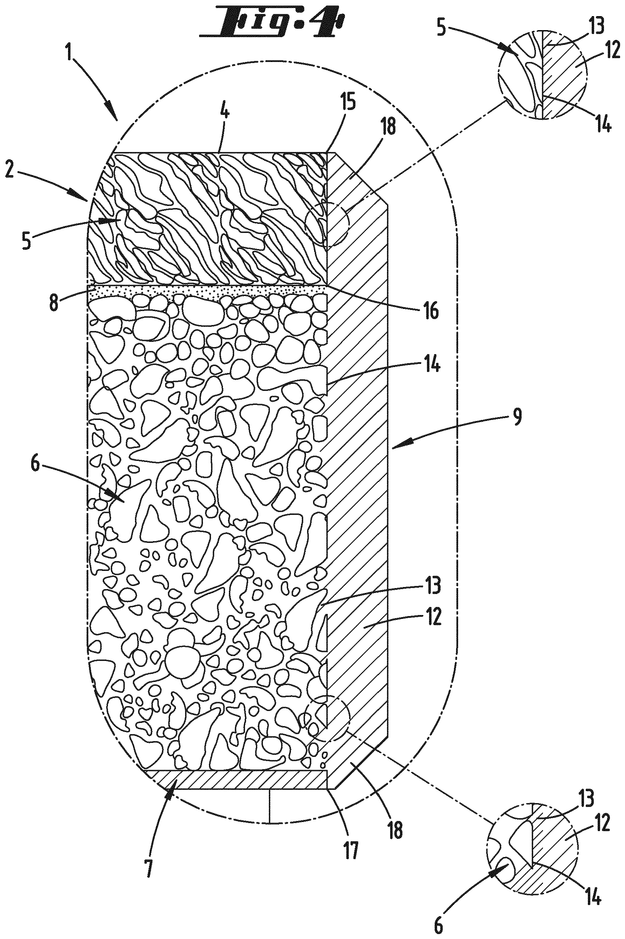

So kann gemäß dem in Figur 4 schematisch dargestellten Ausführungsbeispiel auch beispielsweise zufolge entsprechender Laserbeaufschlagung im Bereich der Verbindungsfläche 14 im Zuge des Kaschiervorganges die der Verbindungsfläche 14 des Plattenkörpers 1 zugewandte Fläche der Kantenleiste 12 angeschmolzen werden, so dass das Kunststoffmaterial der Kantenleiste 12 selbst als Klebstoff, sich gegebenenfalls mit der dreidimensionalen Oberflächenstruktur insbesondere der zweiten Lage 6 verkrallend, dient. Bevorzugt wird dabei, wie auch bei einem üblichen Klebeprozess, die Kantenleiste 12 in Richtung auf die Verbindungsfläche 14 druckbeaufschlagt.

Eine Laserbeaufschlagung zur Erweichung kann auch dann vorgesehen sein, wenn, abweichend zu dem vorstehend beschriebenen Ausführungsbeispiel, eine gesonderte Klebelage auf der Kantenleiste aufgebracht ist. Wie weiter vorne erläutert, kann es sich hierbei auch um über die Breite unterschiedliche Klebelage handeln.

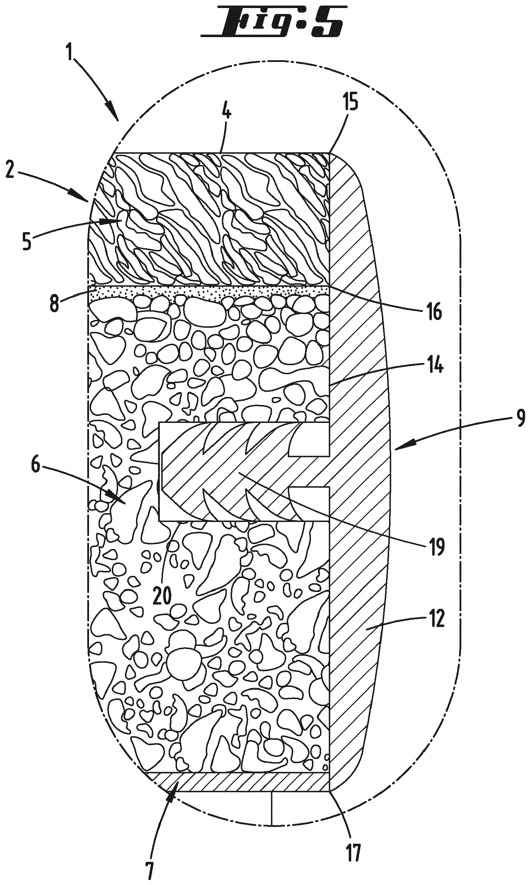

Figur 5 zeigt eine im Hinblick auf Figur 4 entsprechende Querschnittsdarstellung mit einer Kantenleiste 12, die über einen, wie beim Ausführungsbeispiel bevorzugt mittigen bezogen auf die im Einbauzustand gegebene Höhenerstreckung, Rastfuß 19 verfügt. Der Rastfuß 19 kann in einer entsprechenden nutartigen Ausnehmung 20 des Plattenkörpers eingesteckt sein. Aufgrund von widerhakenartigen Ausformungen an dem Rastfuß 19 kann sich schon eine sehr wesentliche, in manchen Fällen auch ausreichende, mechanische Verhaftung ergeben. Bevorzugt ist aber, dass auch bei einer solchen Ausgestaltung zumindest im Bereich des Rastfußes 19 noch eine zusätzliche Verklebung mit dem Plattenkörper vorgenommen ist.

Die (mechanische) Verhaftung der Kantenleiste 12 erfolgt bei dieser Ausführungsform bevorzugt im Bereich der zweiten Lage 6. Hierzu kann in der zweiten Lage 6 ausgehend von der Verbindungsfläche 14 bezogen auf eine durchgehende leistenartige Ausbildung des Rastfußes 19 eine Nut ausgebildet sein, insbesondere eingefräst sein, in die der Rastfuß 19 mit seinen radialen, widerhakenartigen Vorsprüngen eingedrückt wird. Wenn der Rastfuß 19 als einzelner oder mehrfacher, auch in einer Längsrichtung der Kantenleiste 12 freistehender Rastfuß 19 gebildet ist, können alternativ auch entsprechend einzelne Bohrungen (nur) in dem Plattenkörper, bevorzugt der zweiten Lage 6, ausgebildet sein.

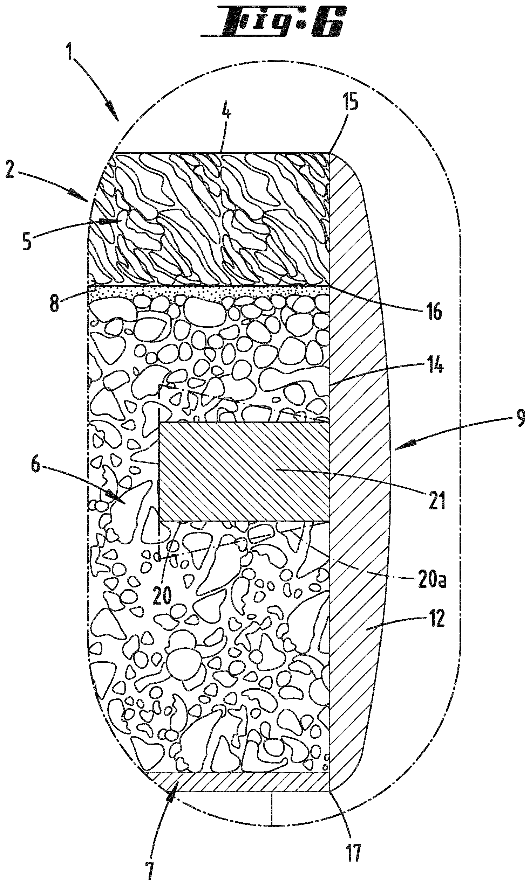

Mit Bezug zu Figur 6 ist eine Ausführungsform dargestellt, bei welcher die Ausnehmung 20 bevorzugt vollständig mit einem unabhängig von der Kantenleiste gebildeten Halterungsmaterial in Form einer Ausfüllmasse 21 gefüllt ist. Bei dem in Figur 6 wiedergegebenen Ausführungsbeispiel füllt die Ausfüllmasse 21 die Ausnehmung 20 praktisch vollständig aus. Die Ausfüllmasse 21 bildet weiter bevorzugt, wie in Figur 6 auch dargestellt, eine mit der Verbindungsfläche 14 etwa fluchtende Kante in der Querschnittsdarstellung.

Es können auch mehreren Ausfüllmassen 21 über die Höhe vorgesehen sein, wobei dann entsprechend auch mehrere Nuten bzw. Ausnehmungen 20 vorgesehen sind.

Die Ausfüllmasse 21 kann zunächst, nachdem der Plattenkörper gegebenenfalls durch Fräsen mit der Ausnehmung 20 versehen ist, in die Ausnehmung 20 eingebracht werden und in noch einem flüssigen oder zumindest klebrigen Zustand kann dann auch - bereits - die Kantenleiste 12 aufgebracht werden. Hierbei kann die Kantenleiste 12, wobei dies aber auch für alle Ausführungsformen zutreffend ist, über die Dicke des Plattenkörpers bzw. die Höhe der Verbindungsfläche 14 unterschiedliche Klebstoffe aufweisen, wobei diese Klebstoffe, wie weiter vorne bereits ausgeführt, nicht notwendig auf der Kantenleiste 12 zunächst aufgebracht sind, bevor diese zur Anlage an die Verbindungsfläche 14 gebracht wird, sondern sie können genauso gut auf der Verbindungsfläche 14 aufgebracht sein bzw. auch teilweise auf der Verbindungsfläche 14 und teilweise auf der Kantenleiste 12.

Alternativ kann auch eine schnell aushärtende Ausfüllmasse 21 eingesetzt sein, die nach dem Aushärten bündig geschliffen ist und sodann einen Teil einer Randfläche des Plattenkörpers 1, die mit der Kantenleiste 12 abgedeckt ist, bildet. Die Kantenleiste 12 ist dann - auch - mit der ausgehärteten Ausfüllmasse verbunden, insbesondere Klebeverbunden.

Im Bereich der Ausfüllmasse 21 kann auch gegebenenfalls auf einen - weiteren - Klebstoff vollständig verzichtet werden, wenn die Ausfüllmasse 21 als solche die erwünschte Verklebbarkeit erbringt.

Im Hinblick auf die unterschiedlichen Klebstoffe kann insbesondere vorgesehen sein, dass in einem außerhalb der Ausnehmung 20 gegebenen Bereich der Verbindungsfläche 14 ein oder mehrere Bereiche mit schneller härtendem Klebstoff vorgesehen sind als es der Klebstoff oder die Ausfüllmasse 21 im Bereich der Ausnehmung 20 erbringt. Somit kann hier ein vorteilhaft günstiges Material für die Ausfüllmasse 21 gewählt werden, das zwar hinsichtlich einer Abbindung der Ausfüllmasse bzw. des Klebstoffes langsamer ist, aber die gewünschte Verbindung und Verkrallung mit dem Plattenwerkstoff im Bereich der Ausnehmung 20 günstiger erbringt.

Die Ausfüllmasse ist bevorzugt eine Kunststoffmasse. Es kann sich beispielsweise um eine Gießmasse, etwa eine Polyurethan-Gießmasse, handeln. Konkreter kann es sich um eine Polyurethan-Schaumstoffmasse handeln. Diesbezüglich sind sehr unterschiedliche Raumgewichte möglich. Ein bevorzugter Bereich liegt zwischen 1000 kg/m³ und 1400 kg/m³. Es sind aber auch Werte außerhalb dieses Bereiches möglich, beispielsweise hinsichtlich des unteren Wertes bis hin zu 500 kg/m³ oder noch weniger und hinsichtlich des oberen Wertes bis hin zu 2000 kg/m³ oder noch mehr.

Wie weiter durch die gestrichelte Linie in Figur 6 angezeigt, kann die Ausnehmung 20 auch im Sinne einer Ausnehmung 20a gebildet sein, die also in dieser Querschnittsdarstellung sich als Hinterschnitt abbildet. Somit kann eine noch bessere mechanische Verkrallung erreicht werden.

Diese Ausführungsform ist auch bei der Ausbildung der Kantenleiste mit dem Rastfuß gemäß Figur 5 ohne weiteres möglich. In diesem Fall, wenn eine entsprechende Ausnehmung mit Hinterschnitt ausgebildet ist, ist auch bevorzugt, dass der Rastfuß 19 in seinem Querschnitt, wie er in Fig. 5 dargestellt ist, an diesen Hinterschnitt angepasst ist, Aufgrund flexibler seitlicher Fortsätze kann er gleichwohl günstig eingebracht werden.

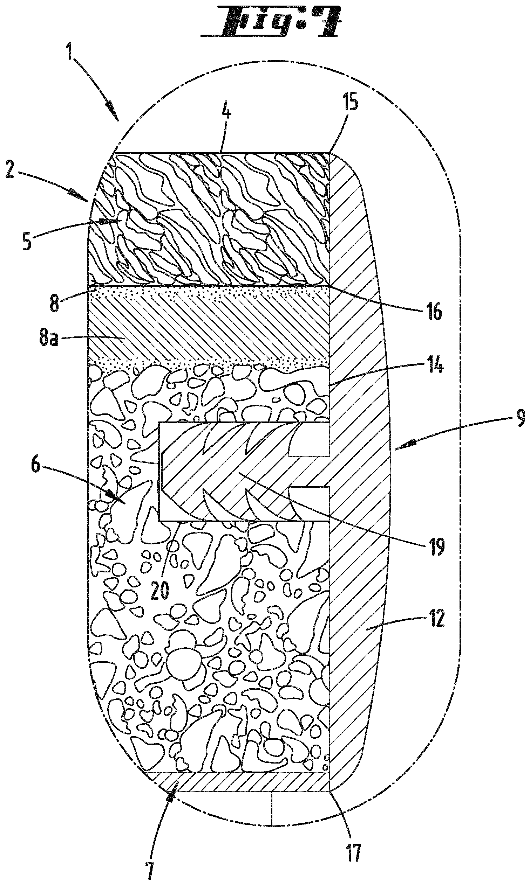

Bei der Ausführungsform der Figur 7, die im Hinblick auf die hier beschriebene Abänderung sowohl auch für die Ausführungsform der Figur 5 wie für die Ausführungsform der Figur 6 zur Anwendung kommen kann, ist von Bedeutung, dass unterhalb der ersten Lage 5 und/oder zwischen dem Gegenzug und der Trägerschicht eine deutlich dickere weitere Lage 8 bzw. 8a ausgebildet ist, die festigkeitsmäßig günstiger ist als die zweite Lage 6. Die weitere Lage 8a kann insbesondere eine erhöhte Zugfestigkeit aufweisen. Sie kann insgesamt aus einem klebstoffartigen Material bestehen, sie kann aber auch, zusätzlich zu der Klebeschicht 8, aus einem Hartschaumstoff wie etwa auf Acrylatbasis oder aus einem Festmaterial bestehen. Sie kann auch aus einem Material bestehen, wie vorstehend für die Ausfüllmasse 21 beschrieben.

Die Lage 8a kann unmittelbar die Verhaftung zu der darunter unter der darüber befindlichen Lage, beim Ausführungsbeispiel, also zu der zweiten Lage 6 bzw. der ersten Lage 5, erbringen. Die Verhaftung kann aber auch auf einer oder beiden Seiten durch eine weitere zusätzliche Klebstofflage 8 erreicht sein.

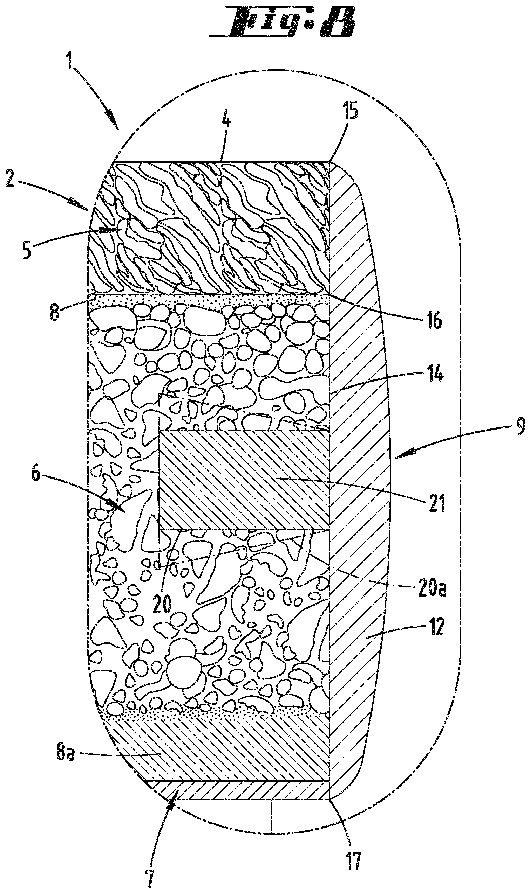

Bei der Ausführungsform der Fig. 8 ist die zusätzliche Lage 8a unterseitig angeordnet. Im Hinblick auf eine Abfolge von oben, ausgehend von der ersten Lage 5, befindet sie sich vor der dritten Lage 7, also hier dem Unterzug. Sie ist wie dargestellt unmittelbar vor der dritten Lage hierbei angeordnet.

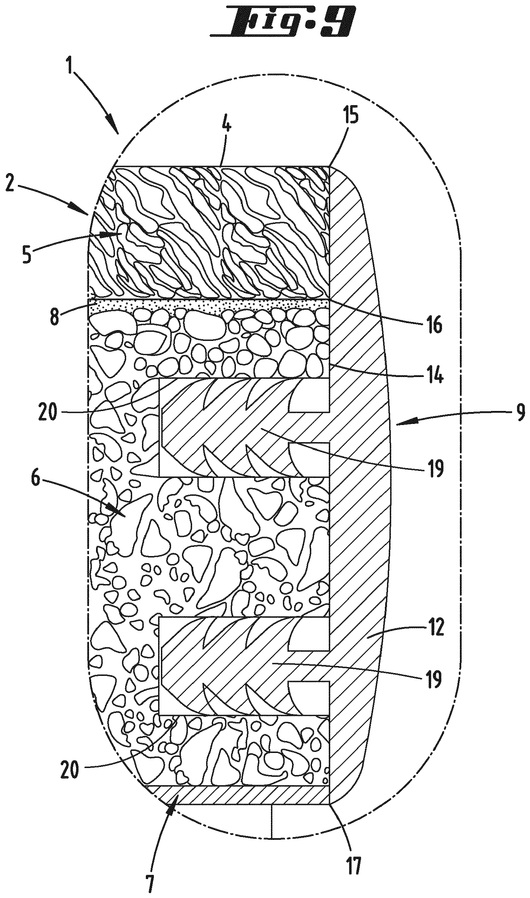

Bei der Ausführungsform der Fig. 9 sind ersichtlich über die Dicke des Plattenkörpers an der Kantenleiste 12 zwei Rastfüße 19 - über die Dicke in dem dargestellten Querschnitt gesehen untereinander - ausgebildet. Entsprechend sind auch zwei entsprechende Ausnehmungen in dem Plattenkörper, bei dem dargestellten Ausführungsbeispiel in der zweiten Lage 6, ausgebildet.

Die dargestellten Ausführungsformen sind nicht jeweils beschränkend zu sehen. Sie können auch miteinander kombiniert vorgesehen sein.

So kann die ledigliche Verklebung der Kantenleiste 12 gemäß bspw. Fig. 3 auch mit einer Abfolge von Lagen gemäß Fig. 7 oder Fig. 8 kombiniert vorgesehen sein. Die Ausgestaltung einer Ausfüllmasse 21 gemäß der Ausführungsform der Fig. 6 kann auch im Sinne der Ausführungsform der Fig. 9 mehrfach über die Dicke des Plattenkörpers vorgesehen sein. Weiter kann dann hiermit auch die sich nach innen erweiternde Ausnehmung 20a kombiniert sein.

Die Bezeichnung einer Lage als zweite Lage oder dritte Lage etc. bedeutet nicht notwendig, dass die zweite Lage unmittelbar unter der ersten Lage angeordnet ist und/oder dass die dritte Lage unmittelbar unter der zweiten Lage angeordnet ist, wenngleich dies in einigen Ausführungsformen auch so gegeben sein kann. In anderen Ausführungsformen können beispielsweise zwischen der ersten und der zweiten Lage und/oder zwischen der dritten und der zweiten Lage jeweils noch eine oder mehr weitere Lagen angeordnet sein. Nicht zuletzt kann auch unterhalb der dritten Lage noch eine oder mehrere weitere Lagen angeordnet sein.

### Liste der Bezugszeichen

| | | | |
|---|---|---|---|
| 1 | Plattenkörper | | |
| 2 | Arbeitsplatte | b | Breite |
| 3 | Küchenmöbel | d | Dicke |
| 4 | Außenfläche | | |
| 5 | erste Lage | | |
| 6 | zweite Lage | | |
| 7 | dritte Lage | | |
| 8 | Klebeschicht | | |
| 9 | Randbereich | | |
| 10 | Längsrandbereich | | |
| 11 | Schmalrandbereich | | |
| 12 | Kantenleiste | | |
| 13 | Klebeschicht | | |
| 14 | Verbindungsfläche | | |
| 15 | äußere Randkante | | |
| 16 | innere Randkante | | |
| 17 | äußere Randkante | | |
| 18 | Randabschnitt | | |
| 19 | Rastfuß | | |
| 20 | Ausnehmung | | |
| 20a | Ausnehmung | | |
| 21 | Ausfüllmasse | | |

## Patentansprüche

1. Plattenkörper (1) mit einem mehrlagigen Aufbau, wobei eine erste, im Gebrauch eine Außenfläche (4) bildende erste Lage (5) aus einem eine steinartige äußere Fläche darbietenden Keramikwerkstoff, Naturstein, einem Quarz-Komposit oder einem sonstigen steinartigen Werkstoff besteht und eine zweite und eine dritte Lage (6, 7) sowie gegebenenfalls weitere Lagen vorgesehen sind, die unter der ersten Lage (5) angeordnet sind, wobei die zweite Lage (6) aus einem mittels eines Bindemittels zu einem Körper verbundenen mineralischen Granulat mit im Vergleich zu der ersten Lage (5) geringer Zugfestigkeit besteht, und die dritte Lage (7) als Unterzug ausgebildet sein kann, wobei weiter die erste Lage (5) eine äußere Randkante (15) und eine innere Randkante (16) und der Plattenkörper (8) eine Dicke (d) aufweisen, wobei ein Randbereich (9) des Plattenkörpers (1) mit einer Kantenleiste (12) abgedeckt ist, **dadurch gekennzeichnet, dass** im Bereich der zweiten Lage (6) hinsichtlich einer Verbindungsfläche (14) eine dreidimensional strukturierte Oberfläche gegeben ist, dass die Kantenleiste (12) sich ausgehend von der äußeren Randkante (15) der die Außenfläche (4) bildenden ersten Lage (5) über eine gesamte Dicke (d) des Plattenkörpers (1) erstreckt, wobei sie auch in Überdeckung zu der dritten Lage (7) ist, dass die Kantenleiste (12) aus einem polymeren Kunststoff besteht, dass die Kantenleiste (12) mit den Lagen (5, 6, 7) verklebt ist und dass eine Dicke der Klebeschicht im Bereich der zweiten Lage (6) über die Verbindungsfläche (14) unterschiedlich ist, zwischen beispielsweise zwei Millimeter und drei Millimeter und praktisch keiner Dicke, etwa 0,1 mm oder 0,2 mm und dass die Verbindungsfläche (14) sich über die gesamte Dicke (d) des Plattenkörpers (1) erstreckt, ausgehend von einer äußeren, die Au-ßenfläche (4) begrenzenden Randkante (15) der ersten Lage (5) über eine innere Randkante (16) der ersten Lage (5) hinaus bis zu einer unteren äußeren Randkante (17) der zweiten Lage (6) bzw. bei einer entsprechenden Anordnung der dritten Lage (7), wobei sich die Verbindungsfläche (14) aus den zum Randbereich (9) hin offenen Stirnflächen der einzelnen Lagen ergibt.

2. Plattenkörper (1) nach Anspruch 1, **dadurch gekennzeichnet, dass** die Kantenleiste (12) an einer in einem Querschnitt rechtwinklig zu der Au-ßenfläche (4) und durchgehend gerade verlaufenden Verbindungsfläche (14) des Plattenkörpers (1) angebracht ist.

3. Plattenkörper (1) nach einem der vorhergehenden Ansprüche, **dadurch gekennzeichnet, dass** zwischen der ersten und zweiten Lage (5, 6) eine vierte und gegebenenfalls weitere Lage ausgebildet ist, beispielsweise auf Basis eines Polyurethan-Polymers oder eines Schaumstoffs.

4. Plattenkörper (1) nach einem der vorhergehenden Ansprüche, **dadurch gekennzeichnet, dass** in dem Plattenkörper (1) unterhalb der ersten Lage (5) eine zu der Kantenleiste (12) hin offene Ausnehmung ausgebildet ist.

5. Plattenkörper (1) nach Anspruch 4, **dadurch gekennzeichnet, dass** in der Ausnehmung ein Halterungsmaterial aufgenommen ist.

6. Plattenkörper (1) nach Anspruch 5, **dadurch gekennzeichnet, dass** das Halterungsmaterial durch einen Rastfuß (19) der Kantenleiste (12) gebildet ist.

7. Plattenkörper (1) nach einem der Ansprüche 5 oder 6, **dadurch gekennzeichnet, dass** das Halterungsmaterial unabhängig von der Kantenleiste (12) gebildet ist.

8. Plattenkörper (1) nach einem der Ansprüche 5 bis 7, **dadurch gekennzeichnet, dass** das Halterungsmaterial eine etwa bündig mit einer im Wesentlichen rechtwinklig zu der Außenfläche (4) verlaufenden Verbindungsfläche (14) sich erstreckende Anschlussfläche bildet.

9. Plattenkörper (1) nach einem der vorhergehenden Ansprüche, **dadurch gekennzeichnet, dass** die Kantenleiste (12) in der Verbindungsfläche (14) über die Dicke (d) mit dem Plattenkörper (1) verklebt ist.

10. Plattenkörper (1) nach Anspruch 9, **dadurch gekennzeichnet, dass** über die Dicke (d) des Plattenkörpers (1) in der Verbindungsfläche (14) unterschiedliche Klebstoffe zur Verbindung der Kantenleiste (12) mit dem Plattenkörper (1) verwendet sind.

11. Plattenkörper (1) nach einem der vorhergehenden Ansprüche, **dadurch gekennzeichnet, dass** die Verklebung auf einem Kaschiervorgang beruhend vorgenommen ist.

## Claims

1. Panel body (1) with a multi-layer structure, wherein a first layer (5) forming an outer surface (4) in use consists of a ceramic material, natural stone, a quartz composite or another stone-like material presenting a stone-like outer surface, and a second and a third layer (6, 7) and optionally further layers are provided, which are arranged under the first layer (5), wherein the second layer (6) consists of a mineral granulate bonded by means of a binder to form a body with low tensile strength compared to the first layer (5), and the third layer (7) can be designed as a bottom beam, wherein furthermore the first layer (5) has an outer edge (15) and an inner edge (16) and the panel body (8) has a thickness (d), wherein an edge region (9) of the panel body (1) is covered with an edge strip (12), **characterised in that** a three-dimensionally structured surface is provided in the region of the second layer (6) with respect to a connecting surface (14), that the edge strip (12) extends from the outer edge (15) of the first layer (5) forming the outer surface (4) over an entire thickness (d) of the panel body (1), wherein it also overlaps the third layer (7), that the edge strip (12) consists of a polymeric plastic, that the edge strip (12) is bonded to the layers (5, 6, 7) and that a thickness of the adhesive layer in the region of the second layer (6) varies over the connecting surface (14), between, for example, two millimetres and three millimetres and practically no thickness, about 0.1 mm or 0.2 mm, and **in that** the bonding surface (14) extends over the entire thickness (d) of the panel body (1), starting from an outer edge (15) of the first layer (5) bounding the outer surface (4) and extending beyond an inner edge (16) of the first layer (5) to a lower outer edge (17) of the second layer (6), or in the case of a corresponding arrangement of the third layer (7), wherein the connecting surface (14) results from the end faces of the individual layers which are open towards the edge region (9).

2. Panel body (1) according to claim 1, **characterised in that** the edge strip (12) is attached to a connecting surface (14) of the panel body (1) which extends in a cross-section at right angles to the outer surface (4) and is continuously straight.

3. Panel body (1) according to one of the preceding claims, **characterised in that** a fourth and possibly further layer is formed between the first and second layers (5, 6), for example on the basis of a polyurethane polymer or a foam.

4. Panel body (1) according to one of the preceding claims, **characterised in that** a recess open towards the edge strip (12) is formed in the panel body (1) below the first layer (5).

5. Panel body (1) according to claim 4, **characterised in that** a retaining material is accommodated in the recess.

6. Panel body (1) according to claim 5, **characterised in that** the retaining material is formed by a latching foot (19) of the edge strip (12).

7. Panel body (1) according to one of claims 5 or 6, **characterised in that** the retaining material is formed independently of the edge strip (12).

8. Panel body (1) according to one of claims 5 to 7, **characterised in that** the retaining material forms a connecting surface extending approximately flush with a connecting surface (14) extending substantially at right angles to the outer surface (4).

9. Panel body (1) according to one of the preceding claims, **characterised in that** the edge strip (12) is bonded to the panel body (1) in the connecting surface (14) over the thickness (d).

10. Panel body (1) according to claim 9, **characterised in that** different adhesives are used over the thickness (d) of the panel body (1) in the connecting surface (14) for connecting the edge strip (12) to the panel body (1).

11. Panel body (1) according to one of the preceding claims, **characterised in that** the bonding is based on a laminating process.

## Revendications

1. Corps de plaque (1) avec une structure à plusieurs couches, dans lequel une première couche (5), formant en utilisation une surface extérieure (4), est constituée d'un matériau céramique, d'une pierre naturelle, d'un composite de quartz ou d'un autre matériau de type pierre, présentant une surface extérieure de type pierre, et une deuxième et une troisième couche (6, 7) ainsi que, le cas échéant, d'autres couches qui sont disposées sous la première couche (5), la deuxième couche (6) étant constituée d'un granulat minéral lié en un corps au moyen d'un liant et présentant une faible résistance à la traction par rapport à la première couche (5), et la troisième couche (7) peut être réalisée sous forme de poutre, la première couche (5) présentant en outre un bord extérieur (15) et un bord intérieur (16) et le corps de plaque (8) une épaisseur (d), une zone de bord (9) du corps de plaque (1) étant recouverte d'une baguette d'arête (12), **caractérisé en ce que** dans la zone de la deuxième couche (6), une surface structurée tridimensionnelle est donnée en ce qui concerne une surface de liaison (14), **en ce que** le rebord (12) s'étend, à partir du bord extérieur (15) de la première couche (5) formant la surface extérieure (4), sur toute une épaisseur (d) du corps de plaque (1), en étant également en recouvrement avec la troisième couche (7), **en ce que** le rebord (12) est constitué d'une matière plastique polymère, **en ce que** le rebord (12) est collé aux couches (5, 6, 7) et **en ce qu'**une épaisseur de la couche de colle est différente dans la zone de la deuxième couche (6) sur la surface de liaison (14), entre par exemple deux millimètres et trois millimètres et pratiquement aucune épaisseur, environ 0,1 mm ou 0,2 mm, et **en ce que** la surface de liaison (14) s'étend sur toute l'épaisseur (d) du corps de plaque (1), en partant d'un bord extérieur (15) de la première couche (5) délimitant la surface extérieure (4), en passant par un bord intérieur (16) de la première couche (5), jusqu'à un bord extérieur inférieur (17) de la deuxième couche (6) ou dans le cas d'une disposition correspondante de la troisième couche (7), la surface de liaison (14) résultant des surfaces frontales des différentes couches ouvertes vers la zone de bordure (9).

2. Corps de plaque (1) selon la revendication 1, **caractérisé en ce que** le rebord (12) est fixé à une surface de liaison (14) du corps de plaque (1) qui s'étend en section transversale perpendiculairement à la surface extérieure (4) et en ligne droite continue.

3. Corps de plaque (1) selon l'une des revendications précédentes, **caractérisé en ce qu'**une quatrième couche et éventuellement une autre couche est formée entre la première et la deuxième couche (5, 6), par exemple à base d'un polymère de polyuréthane ou d'une mousse.

4. Corps de plaque (1) selon l'une des revendications précédentes, **caractérisé en ce qu'**un évidement ouvert en direction du rebord (12) est formé dans le corps de plaque (1) en dessous de la première couche (5).

5. Corps de plaque (1) selon la revendication 4, **caractérisé en ce qu'**un matériau de support est logé dans l'évidement.

6. Corps de plaque (1) selon la revendication 5, **caractérisé en ce que** le matériau de support est formé par un pied d'encliquetage (19) du rebord (12).

7. Corps de plaque (1) selon l'une des revendications 5 ou 6, **caractérisé en ce que** le matériau de support est formé indépendamment du rebord (12).

8. Corps de plaque (1) selon l'une quelconque des revendications 5 à 7, **caractérisé en ce que** le matériau de support forme une surface de connexion s'étendant approximativement à fleur d'une surface de connexion (14) s'étendant sensiblement à angle droit par rapport à la surface extérieure (4).

9. Corps de plaque (1) selon l'une quelconque des revendications précédentes, **caractérisé en ce que** la bande de chant (12) est collée au corps de plaque (1) dans la surface de liaison (14) sur l'épaisseur (d).

10. Corps de plaque (1) selon la revendication 9, **caractérisé en ce que** des adhésifs différents sont utilisés sur l'épaisseur (d) du corps de plaque (1) dans la surface de liaison (14) pour relier le rebord (12) au corps de plaque (1).

11. Corps de plaque (1) selon l'une des revendications précédentes, **caractérisé en ce que** le collage est effectué sur la base d'une opération de contrecollage.
